# EUROPEAN PATENT SPECIFICATION

(11) **EP 2 717 674 B1**
(45) Date of publication and mention of the grant of the patent: **04.04.2018**
(21) Application number: 12730673.6
(22) Date of filing: 06.06.2012
(51) Int. Cl.: A01G 33/00, A63B 22/00, A63B 22/20

(54) **A FLOATING STRUCTURE, A METHOD FOR ADAPTING A DRAUGHT LEVEL OF A FLOATING STRUCTURE, A METHOD OF CULTURING MARINE ORGANISMS, AND A USE OF A FLOATING STRUCTURE**
SCHWIMMENDE STRUKTUR, VERFAHREN ZUR ANPASSUNG EINES TIEFGANGSNIVEAUS EINER SCHWIMMENDEN STRUKTUR, VERFAHREN ZUR KULTIVIERUNG VON MEERESORGANISMEN UND VERWENDUNG EINER SCHWIMMENDEN STRUKTUR
STRUCTURE FLOTTANTE, PROCÉDÉ POUR ADAPTER UN NIVEAU DE FLOTTAISON D'UNE STRUCTURE FLOTTANTE, PROCÉDÉ DE CULTURE D'ORGANISMES MARINS, ET UTILISATION D'UNE STRUCTURE FLOTTANTE

(30) Priority: 06.06.2011 NL 2006904
(43) Date of publication of application: 16.04.2014
(73) Proprietor: Kelp Management B.V., 1702 KC Heerhugowaard (NL)
(72) Inventor: SCHIPPER, Job, 1703 DH Heerhugowaard (NL); BAKKER, Willem, 1703 DH Heerhugowaard (NL)
(74) Representative: V.O.
(86) International application number: PCT/NL2012/050393
(87) International publication number: WO 2012/169886

(56) References cited:
- US-A- 3 939 510
- US-A1- 2009 134 091
- US-A1- 2010 018 470
- BELA HIERONYMUS BUCK ET AL: "The offshore-ring: A new system design for the open ocean aquaculture of macroalgae", JOURNAL OF APPLIED PHYCOLOGY, KLUWER ACADEMIC PUBLISHERS, DO, vol. 16, no. 5, 1 October 2004 (2004-10-01), pages 355-368, XP019247746, ISSN: 1573-5176

## Description

The invention relates to a floating structure. Such a floating structure is, for instance, used in the field of culture of marine organisms, especially seaweed. More particular, the invention relates to a new artificial reef, supplying a support for the growth of the organisms.

### BACKGROUND

Macroscopic marine algae form an important living resource of the oceans. Seaweed is a loose, colloquial term encompassing macroscopic, multicultural, benthic marine algae. The term includes some members of the red, brown and green algae. Seaweeds are food important for humans and animals, as well as fertilizers for plants and a source of various chemicals. Seaweeds have been gaining momentum as a new experimental system for biological research and as an integral part of integrated aquaculture systems. We all use seaweed products in our day-to-day life in some way or another. For example, some seaweed polysaccharides (alginates, agar and carrageenan),are used as gellifiers in toothpaste, soap, shampoo, cosmetics, milk, ice cream, meat, processed food, air freshener, wound dressings, culture media and many other items. The major direct use of these plants as food is in Japan, China and Korea, and in the Indian Ocean where seaweed cultivation has become a major coastal industry. The main food species grown by aquaculture in these countries are Nori or Zicai (*Porphyra,* a red alga), Kombu, Kunbu or Haidai (*Laminaria* or *Saccharina:* brown algae) and Wakame (*Undaria,* also a brown alga). In Japan alone, the total annual production value of nori amounts to more than US$2 billion, one of the most valuable crops produced by aquaculture in the world.

During the last 50 years, approximately 100 seaweed species have been tested in field farms, but only a dozen are being commercially cultivated today. Table 1 provides production data for the top species.

TABLE 1 Top cultivated seaweed genera in the world during 2000 (FAO 2003).

| *Taxon* | *Value (10⁶ U.S.$)* | *Raw material (metric tons)* | *U.S.$ per metric ton* |
|---|---|---|---|
| *Laminaria* | 2,811 | 4,580,000 | 613 |
| *Porphyra* | 1,118 | 1,011,000 | 1,105 |
| *Undaria* | 149 | 311,105 | 480 |
| *Eucheuma* and *Kappaphycus* | 46 | 628,576 | 73 |
| *Gracilaria* | 11 | 12,510 | 879 |
| Total | 4,632 | 5,972,737 | |

Different species require different farming methods. Although some seaweeds need one-step farming through vegetative propagation, others need two-step or multistep farming. The latter must be propagated from spores and cannot survive if only propagated vegetatively.

In vegetative cultivation (e.g. for Eucheuma and Gracilaria), small pieces of seaweed are taken and placed in an environment that will sustain their growth, which normally will be seawater. When they have grown to a suitable size they are harvested, either by removing the entire plant or by removing most of it but leaving a small piece that will grow again. When the whole plant is removed, small pieces are cut from it and used as seedstock for further cultivation. The seaweed can be held in its environment in several ways: pieces of seaweed may be tied to long ropes suspended in the water between wooden stakes, or tied to ropes on a floating wooden framework (a raft); sometimes netting is used instead of ropes; in some cases the seaweed is simply placed on the bottom of a pond and not fixed in any way; in other cases, the seaweed is either forced into the soft sediment on the sea bottom with a fork-like tool, or held in place on a sandy bottom by attaching it to sand-filled plastic tubes.

In an alternative embodiment of cultivation, gametophytes of the seaweed (for instance of Laminaria, or Undaria) are separately produced, harvested and these gametophytes are placed on the support structure for formation of the sporophyte and further cultivation thereof into mature seaweeds. In order to prevent washing off of the gametophytes, these are adhered to the supporting structure by way of e.g. a natural gluing compound. Further, alternatively, even an earlier stadium in the life cycle of the seaweed, the zoospore, is used and placed on the support structure in a similar way.

For large scale marine algae cultures in deeper water often use is made of free-floating artificial structures, held free-floating by buoys or through anchoring, in which ropes or netting (or any other substrate that is suitable for the culture of the seaweed) are provided. When in open sea, the free-floating structures will move with the waves, which is preferred since the water movement allows for refreshing the nutrients and supply carbondioxide in the water. The seaweed is located relatively close to the water surface in order to provide the seaweed with sufficient light. However, if the water current or wave action is too strong, it can damage the plants and even wash away the planted lines from the supporting frame. In extreme conditions also the whole structure becomes in danger.

There is thus a need for a floating structure, which is stable during heavier weather when the wave action is increased.

### SUMMARY OF THE INVENTION

The invention contemplates obtaining a floating structure whereby at least one of the above-mentioned drawbacks is obviated while maintaining at least one of the advantages. In particular, the invention contemplates obtaining a floating structure which is relatively stable with substantially increased wave action.

To this end, the inventors now have provided a floating structure according to claim 1.

By use of a draught adapting module provided with an upwardly extending wall with openings enabling fluid exchange, the floating structure can become more stable with substantially increased wave action. This is, substantially increased wave action corresponds to substantially bigger waves. Due to the inertia of the system, consequently fluid from the exterior of the chamber will enter the chamber through the openings, resulting in weight gain of the floating structure. Therefore, the buoyancy of the floating structure decreases, causing the draught level of the floating structure to increase. The draught level increase increases the stability of the floating structure. As a consequence, the invention provides a floating structure which is relatively stable with substantially increased wave action. The floating structure has better seaworthy properties and any loss of the crop is effectively counteracted, since the draught adapting module modifies the draught of the floating structure depending on external wave activities.

Moreover, the draught increase may cause entities, such as plant lines, attached to a lower part of the floating structure to sink with the structure. As a result, damage of the entities, such as plant lines or measuring instruments, and/or damage of a culture of marine organisms attached to the entities may be counteracted, since the entities may due to the sinking be kept below the strong wave action and/or strong water current.It is noted that, in this context, "floating" means that, in a balanced state, an object is partly submerged in a fluid, e.g. a liquid, such as sea water, and partly extends above the fluid. In order to be capable of floating in a certain fluid, the floating structure may comprise a floating body. Such a floating body will have a density that is lower than the density of the surrounding fluid. For example, the floating body is an object enclosing a volume. The volume may be a vacuum or may be filled, for instance, with a gas, e.g. air. The volume can be bounded by a wall of the floating body, the wall being made from a metal such as steel, or from another material, such as a plastic or a composite material. It is noted that the floating body can at least partially be inflatable, e.g. as a PVC tube. Alternatively, the floating body is substantially homogeneous. The floating body may thus be a piece of foam, e.g. polyurethane or polystyrene foam or a closed PE tube.

It is noted that the floating structure does not need to comprise a, substantially separate, floating body. A float volume having less weight than a volume of a fluid being displaced by it, i.e. having a lower density, may, alternatively or additionally, be integrated in the floating structure. This may be done by manufacturing the unit from a material with a lower density than the density of the surrounding fluid. In case the surrounding fluid is sea water the density of the fluid may be about 1025 kg/m³. Depending on the temperature and salinity of the sea water, the density of the sea water may, for instance, vary between about 1020 and about 1050 kg/m³ or between 1030 and about 1040 kg/m³.

Further, it is noted that an object floating in a fluid has a certain draught. This draught of the object is at least meaning a vertical distance between the surface of the fluid, e.g. the waterline, and a lowest part of the floating object.

The floating structure may be floating in the fluid, like water, e.g. sea water. According to an aspect of the invention, the draught level of the floating structure can be adapted by increasing the draught of the floating structure when the amplitude of exterior fluid waves increases.

Since the floating structure has an inertia when floating and/or moving in a fluid, the draught of the floating structure may vary when the structure moves up and down due to waves. In other words, the draught of the floating structure may vary between a moment when the structure floats at a wave its highest point and a moment when the structure floats at a lower point between two waves. During times with enhanced fluid movement the waves may become relatively large. Then, the inertia of the floating structure can cause that the draught of the floating structure increases temporarily when the fluid level of the surrounding fluid rises, and it can cause that the draught of the structure decreases temporarily when the fluid level drops. If the draught varies so much that the fluid level of the surrounding fluid, during moments that the structure is submerged a bit extra due to its moment of inertia, reaches openings in the upwardly extending wall which were moments before, when the structure was not yet submerged the bit extra, still above the fluid level, fluid will enter the chamber of the draught adapting module through these openings. The fluid finding its way into the chamber of the draught adapting module makes the floating structure heavier. Due to the fact that the floating structure gains weight, the gravity force will become larger than the buoyancy force, i.e. the buoyancy of the floating structure decreases, and therefore the floating structure will sink to some extent. In other words, the draught will increase durably with respect to the previous draught of the structure, when the fluid had not yet entered the chamber. It is noted that the increased draught will also fluctuate between moments when the floating structure is located at a top of a wave and moments when the structure is located in a trough.

It is noted that the inertia of a floating object is depending on the mass and the buoyancy of the object. In order to enable water from waves to flow into the chamber of the floating structure, the floating structure can be arranged to have such inertia that the floating structure does not completely follows the undulating movement of the waves. This is, the oscillating movement of the floating structure is attenuated by the inertia of the floating structure. Therefore, the movement of the structure does not completely follow the movement of the water surface. Contrary, the vertical position of the structure is stabilized to some extent. Therefore, the buoyancy adapting module can brake through the waves to at least some extent. Consequently, the fluid surface can oscillate relative to the floating structure. As a result, the fluid surface can oscillate relative to the openings of the draught adapting module as well, causing fluid to flow into the chamber through openings in its upwardly extending wall during moments that these openings are at least partly located below the fluid surface. The fluid flowing into the chamber results in a weight gain of the floating structure.

If the draught fluctuation causes surrounding fluid to enter the chamber through openings at a higher height level, more fluid may accumulate inside the chamber and the structure may even further sink, thereby even further durably increasing the draught. It is noted that, in this context, durably means less temporarily, thus, the draught is increased for a longer time than the time interval between a moment that the structure due to waves is at a highest point, i.e. a crest of a wave, and a moment that the structure is at a lowest point, e.g. a through.

Besides, the moment of inertia of the floating structure may increases due to the weight gain. The weight gain can be temporary weight gain, e.g. weight gain caused by fluid accumulating in the draught adapting module. Preferably, the design of the structure allows for such temporary weight changes.

Moreover, the structure may gain weight more structurally due to growing of marine organism connected to the structure and may lose weight due to the harvesting of marine organism. For example, the floating behavior of the structure can adapt because of the increased weight of seaweed during culturing. Preferably, the design of the structure allows for such relatively structural weight changes.

Additionally or alternatively, a trim device may be provided for trimming the draught of the floating unit, e.g. by substantially structurally adapting the weight of the device, for example by at least partly filling a sealable hollow room of the trimming device with e.g. sea water, or for example by at least partly inducing a fluid to flow outwardly from the hollow room and/or filling the room with air. It is noted that the trim device may thus comprise one or a multiple number of sealable hollow rooms, e.g. three hollow rooms, for instance each being about two meter wide. The hollow room can be provided with at least one and preferably with inflow/outflow openings that can be stopped. By providing the trim device, it can be facilitated to substantially structurally adapt the weight of the floating unit. For instance, the unit may be adapted to float with a certain draught in a certain type of liquid, e.g. sea water with a certain saltiness or density, when there are substantially no waves. Alternatively or additionally, the unit may be adapted for supporting a certain load and or a certain type of marine organism, which may have a certain density. The trim device and/or at least one of its hollow rooms can for instance be provided in or at a horizontal intermediate structure located between downwardly extending bodies of the floating unit. Providing a sealable hollow room in or at such a horizontal intermediate structure may enable relatively good accessibility to the hollow room, also when the floating structure is in use.

It is noted that the fact that the draught adapting module is arranged at a top part of the floating unit is not limiting the structure to structures with a module being arranged on top of the floating unit. For example, the draught adapting module may be attached to a side of the top part of an elongated floating unit and/or may be surrounding the top part.

In an advantageous embodiment according to the invention, the floating structure is arranged for rising when the waves get smaller. Therefore, the draught adapting module may be arranged for letting fluid out when the waves get smaller.

Preferably, the draught adapting module is arranged for continuously letting fluid out. The floating structure can rise or sink depending on the extent of fluid flowing into the chamber and the extent of fluid flowing out of it. By the rising or the sinking of the floating structure, the ratio of inflow and outflow of fluid changes until a substantial equilibrium is reached. Then, the draught does not substantially change any longer, until the movement of the fluid in the exterior substantially changes and a new equilibrium is sought.

In an advantageous embodiment according to the invention, the floating structure is arranged to be balanced in such a way that when the chamber is filled with a fluid to such an extent that a fluid level inside the chamber is at least above the underside of the lowest opening, the fluid level inside the chamber is higher than the fluid level of a fluid at least partly surrounding the floating structure, at a moment that the buoyancy force applied to the floating structure equals the gravity force applied to the floating structure.

For example, when the chamber is filled with fluid to such an extent that a fluid level inside the chamber is at least above the underside of the lowest opening, fluid can flow out of the chamber. If the opening is under the fluid level of the surrounding fluid, fluid can flow into the chamber as well. If the fluid pressure, at a certain height, is higher inside the chamber than the fluid pressure outside the chamber, more fluid will flow out of the chamber than into the chamber through the openings at that certain height. The fluid pressure inside the chamber may, for instance, be higher than the outside pressure when the fluid level inside the chamber is higher than the outside fluid. Therefore, it may thus be advantageous to arrange the floating structure to be balanced in such a way that a fluid level of fluid inside the chamber is higher than a fluid level of a fluid at least partly surrounding the floating structure, at a moment when the floating structure is experiencing a force applied by the gravity that is equal to the buoyancy force applied by the fluid surrounding the floating structure.

By doing so, at least a part of the fluid inside the chamber may flow out of the chamber, thereby reducing the weight of the floating structure and causing the structure to rise and therefore decreasing the draught of the floating structure.

However, at substantially the same time new fluid may enter the chamber from the exterior, thereby increasing the weight of the floating structure. If the weight increase substantially equals the weight decrease, the total weight of the floating structure does not substantially change, therefore the gravity force stays substantially the same, and the structure will thus not rise, nor sink.

If the weight increase does not substantially equal the weight decrease, the structure will not remain stationary. Therefore, the structure will sink if the inflow of fluid exceeds the outflow of fluid in a certain time interval, or the structure will rise when during a certain time interval the outflow exceeds the inflow.

In an advantageous embodiment according to the invention, the openings may, for example, be provided with one or a multiple number of valves and/or flaps. Alternatively or additionally, the openings may be provided as parts of a permeable membrane.

In a further advantageous embodiment according to the invention, the openings are formed as bare holes. An advantage of using bare holes for letting through fluid, over using valves, flaps and/or water permeable membranes, is that dysfunction of the openings due to fouling, such as organic fouling, e.g. sessilia, bivalves, etc., and/or inorganic fouling, e.g. salt, is counteracted.

The openings can be substantially round holes. For example, the holes can have diameter of between 2 and 50 mm, preferably between 4 and 12 mm, e.g. about 5, about 8 or about 10 mm. Alternatively the openings can be slots or have other shapes. So, the openings may be e.g. rhombic, star-shaped, or oval. It is noted that different openings of the multiple number of openings can have different shapes and/or sizes.

The openings comprise a first group of first openings at a first height level in the upwardly extending wall and a second group of second openings at a second height level in the upwardly extending wall, wherein the second height level is higher than the first height level. In principle, the first group and the second group may each contain a multiple number of openings or just one opening.

The fluid exchange capacity of the second group is larger than the fluid exchange capacity of the first group. By designing the openings of the first group and the second group such that the inflow into the chamber is higher than the outflow from the chamber, the filling process of the chamber can be faster than the discharging process, so that the net weight of the draught adapting module increases and the floating structure lowers in the fluid (sea). For example, the ratio between the exchange capacity of the first group and the exchange capacity of the second group is in the range of 1:10 to 1:1000, preferably in the range of 1:50 to 1:200, more preferably the ratio is about 1:100. For example, substantially all openings of the first and the second group can have the same size, whereas the second group may comprise e.g. about 100 times more openings than the first group. For instance, the second group comprises merely 1 opening and the first group comprises about 100 openings. Similarly, the number of first openings may equal the number of second openings, while, however, the second openings are larger than the first openings. In both cases, a larger volume of fluid may flow in (per time unit) than a volume of fluid that flows out (per time unit), especially when integrated over a wave period. Apparently, the above-mentioned features in the number and the size of the openings can be combined in another design of first and second openings such that the fluid exchange capacity of the second group is larger than the fluid exchange capacity of the first group. Advantageously, the discharge flow is regulated such that the first, lower opening(s) have a lower discharge capacity than the intake flow capacity of the second, higher opening(s).

It is noted that the openings in the wall are generally structural elements of the floating structure. The inflow / outflow capacity through the openings is then invariant. In a specific embodiment, the draught adapting module is provided with means for dynamically adapting the inflow / outflow capacity of a single or a multiple number of openings. As an example, a passive valve can be applied to at least partially closing one or more openings. The passive valve may operate depending on an externally applied pressure, e.g. due to an incoming wave. Further, an actively controlled valve can applied for controlling inflow / outflow capacity of the one or more openings. The valve can operate when driven by an internal driving system, such as a feedback circuit, or can operate upon external actuation, e.g. responding to external command signals generated by manually setting a draught / floating performance of the structure. It will be apparent that a single or a multiple number of valves can be applied for controlling the inflow / outflow capacity of corresponding openings.

If at a certain moment the fluid level inside the chamber is higher than the topside of the openings of the first group, more fluid can enter the chamber of the draught adapting module through the second group at moments a wave is at a high point, i.e. at or near its highest point, than that fluid can flow from the draught adapting module through the first group during times the fluid level of the fluid surrounding the draught adapting module has lowered below the second group, which may occur during moments a wave is at or near its lowest point, i.e. when the draught adapting module is located in a through. Therefore, it can be accomplished that the floating structure will not substantially rise as long as the size of the amplitude of the wave does not substantially increase. Moreover, it can be accomplished that the floating structure will sink when during a certain time interval more fluid enters the chamber due to relatively high waves, than that leaves the chamber due to the difference between the pressure inside and the pressure outside of the chamber.

When the fluid movement of the fluid in which the floating structure floats, i.e. in the exterior, decreases, the waves can become smaller. Therefore, during a time interval enclosing a natural number of wavelengths, less fluid may flow into the chamber than will flow out of it, thereby causing the floating structure to rise a certain distance, i.e. the floating structure may rise until a new equilibrium is reached.

It is noted that also the thickness of the chamber wall contributes in the floating balance of the floating structure. When a part of the chamber wall is submerged, the submerged volume of the wall part, the displacement, causes an upwardly oriented force, contributing to the floating capacity of the floating structure. So, when submerging the chamber, the upwardly oriented force that is caused by the displacement of the submerged wall part increases. As a design parameter, the thickness of the chamber wall can be set to control the floating capacity. In a particular embodiment, the thickness of the chamber wall depends on the vertical position. As an example, the thickness of the chamber may increase with increasing height, thereby progressively increasing the upwardly oriented force when the floating structure sinks. In order to enable the draught adapting module to work properly, the upwardly increasing force due to the displacement of the submerged chamber wall is preferably not larger than the downwardly oriented force caused by the net fluid volume increase into the chamber caused by external waves.

Preferably, the floating structure is provided with means that are conductive to and/or facilitate relatively quick sinking of the floating structure. Therefore, a portion of the floating structure that is substantially under the fluid level before waves get larger will relatively swiftly sink substantially further under the fluid level when waves get larger. That is, the draught will get larger relatively quickly. If, for example, one or a multiple number of nets and/or ropes, e.g. seedling lines, which are also called plant lines, are attached to the portion of the floating structure that is substantially under the fluid level, e.g. the waterline, before waves get larger, the nets and/or ropes will relatively swiftly sink substantially further under the fluid level when waves get larger. Thus, the nets and/or ropes can then sink relatively rapidly below the area of the largest fluid agitation which often is located relatively close beneath the waves, thereby counteracting damage of the nets and/or lines and/or damage of a culture of marine organisms living on the nets and/or lines.

Means that are conductive to and/or facilitate relatively quick sinking of the floating structure and/or counteract and/or hinder fast rising of the floating structure may include openings comprising a first group of first openings at a first height level in the upwardly extending wall and a second group of second openings at a second height level in the upwardly extending wall, wherein the second height level is higher than the first height level.

It is noted that the multiple number of openings can comprise more than two sets of openings, wherein each following set may be positioned at least partly above the previous set.

Moreover, said means may include that the fluid exchange capacity of the second group is larger than the fluid exchange capacity of the first group. Further, a following set of openings positioned further upwards may have a larger fluid exchange capacity than a lower positioned group. That is, a group of openings at a higher height level is capable of letting through more fluid within in a certain period of time than a lower positioned group.

In an advantageous embodiment according to the invention, the second openings are larger than the first openings.

In a further advantageous embodiment according to the invention, the number of second openings is larger than the number of first openings.

Additionally, a further group of openings, being positioned even higher, may comprise bigger openings and/or more openings than the second group. Furthermore, each further group being positioned even higher, may comprise bigger openings and/or more openings than a, and preferably each, lower group.

Preferably, the size, shape and/or number of openings and/or the pattern formed by the openings is/are arranged for a certain fluid action. This is, the choice of a certain design of the openings and/or the pattern may be dictated by expected fluid action. Preferably, the expected fluid action includes information about expected wave types, wave frequency, wave height and/or the speed of changed in fluid action. It is noted that such expected fluid action may typically differ for shallow waters, e.g. near a beach, and deep waters, e.g. an open ocean.

In yet a further advantageous embodiment according to the invention, the upwardly extending wall has an upwardly divergent profile. Alternatively, not the entire wall, but only a portion of the wall has an upwardly divergent profile. Therefore, a section of the wall or wall portion which is located above a lower section of the wall or wall portion may have a larger outline and therefore may provide more space for providing apertures, which aids to providing more openings in each higher located group.

In addition or alternatively, the floating structure may be provided with means that counteract and/or hinder relatively fast rising of the floating structure. Therefore, said portion of the floating structure will relatively slowly rise closer to the fluid level, e.g. the waterline, when waves get smaller. If, for example, one or a multiple number of nets and/or lines are attached to said portion, the nets and/or ropes may therefore relatively slowly rise to a level relatively close beneath the fluid level when waves get smaller. Thus, it can be accomplished that too quick rising of the ropes and/or nets will be prevented, when waves and current are just temporary decreased.

Means that counteract and/or hinder relatively fast rising of the floating structure may include means that hinder fluid inside the chamber of the draught adapting module to relatively quickly flow out of it, preferably without hindering fluid to flow into the chamber.

In an advantageous embodiment according to the invention, the chamber contains fluid absorbing material. For example, said means includes a water absorber, e.g. a sponge. The fluid absorbing material may prevent that fluid relatively quickly flows from the chamber to the exterior through certain openings, when these openings are located above the fluid level of the fluid outside the chamber.

Additionally or alternatively, said means may comprise flaps and/or valves. The flaps and/or valves may counteract that fluid flows out of the chamber relatively swiftly.

In a further advantageous embodiment according to the invention, the chamber includes a flow resistive structure. Such a flow resistive structure may divert and/or slow down the fluid travelling from a higher opening where the fluid entered the chamber to a lower opening, where the fluid may tend to leave the chamber. The flow resistive structure may include a fluid resistive path extending from an opening at a higher level to an opening at a lower level.

In yet a further advantageous embodiment according to the invention, the chamber includes a single or a multiple number of partition plates arranged mainly transverse to the tubular direction at a vertical (height) position(s) between the top and the bottom of the draught adapting module providing staggered chamber partitions. Preferably, the openings include a repeated opening pattern, each opening pattern corresponding to a respective chamber partition. Alternatively or additionally, each chamber partition has an opening pattern that is similar to the opening patterns of the other chamber partitions.

Advantageously, the upwardly extending wall is strictly tubular shaped. Alternatively, the wall may have another shape. For example, a substantially tubular shape can be provided, e.g. such that the upwardly extending wall is substantially trumpet shaped or conical shaped. Generally, the upwardly extending wall defines an inner area that is invariant in the height direction or varies as a function of height, e.g. having an increasing diameter with increasing height. The wall generally has a closed contour, e.g. in the shape of a circle, ellipse, oval, triangle, square, rectangle, polygon, or similar shape. Further, the upwardly extending wall may have an increasing or decreasing thickness with increasing height.

In a further advantageous manner, the draught adapting module comprises a fluid collection element being fixed to the exterior of the wall and extending radially away therefrom. The fluid collection element may be suitable for collecting fluid provided by a wave and for subsequently providing at least a part of the fluid collected to at least one of the openings in the wall of the chamber. The fluid collection element, which may be funnel shaped, may be able of collecting a relatively large amount of fluid from a wave. The collected fluid may subsequently, when the chamber is situated at a relatively low point, e.g. between two high points of a wave, be provided to a group of openings that, at that moment, is actually located even above the water level at said low point. Thus, at least a part of the collected fluid may then be caused to flow into the chamber through said group of openings. Therefore, a means may be provided that is conductive to and/or facilitates relatively swift sinking of the floating structure. The fluid collection element may be implemented as a fluid container that may temporarily contain fluid. The fluid container may be open on the upper side, and mainly closed on the lower side, allowing fluid to flow to an opening in the tubular wall of the draught adapting module.

Additionally, the fluid collection element may help hindering swift rising of the structure, since fluid flowing out of the chamber may be caught by the fluid collection element. This caught fluid may still contribute to the weighting of the floating structure.

Advantageously, the floating unit includes a security floating body. Preferably, the security floating body is arranged on top of the draught adapting module. Alternatively or additionally, a security floating body may be arranged on another spot, e.g. at a top part of the floating unit.

By providing a security floating body, which may be suitable for preventing further sinking of the floating structure when the chamber of the draught adapting module is substantially completely filled with fluid, e.g. sea water, it can be prevented that the floating structure submerges completely. Alternatively, the security floating body may allow the structure to submerge substantially completely, but may prevent that the structure sinks to the bottom of the sea.

The security floating body can be constructed as an air chamber, e.g. being integrally formed with the draught adapting module and/or the floating unit. However, the security floating body can be constructed alternatively, e.g. in the form of a buoy or a floater which, for instance, is connected to the unit and/or the draught adapting module by means of e.g. a chain or a rod.

Preferably, the security floating body is located at or near the top of the floating structure, so that it does not hinder the desired sinking normally caused by the draught adapting module when waves grow bigger. In this context it is noted that an increasing wall thickness of the draught adapting module, as a function of the height, also functions as a security, since an increasing wall thickness generates a progressively, more than linear increasing upwardly oriented force, when submerged in the water. The specific thickness profile of the wall can be used as a design parameter for defining an additional floating capacity.

Advantageously, the floating structure comprises a multiple number of draught adapting modules. The multiple number may comprise two modules. If the structure is substantially elongated in a substantially horizontal direction, each of the two modules may be located at or near one of the lateral ends of the structure. Alternatively the structure may have more than two modules, e.g. three, four, five or ten.

The ballast may be provided substantially below the draught adapting module or below one of the multiple number of draught adapting modules. The ballast may be comprised in a ballast module. The ballast module may comprise a chunk, such as a concrete block or a lumb of lead and/or may comprise a ballast chamber at least partly filled with e.g. stones, scrap metal, etc. Alternatively, the ballast module may comprise a relatively heavy fluid or the external fluid such as water. If the structure comprises a multiple number of draught adapting modules, ballast may be provided below some or all of the modules. Alternatively or additionally, ballast may be provided between the modules, e.g. substantially in the middle between two modules.

Alternatively or additionally, ballast may be provided in another form. For example, the ballast may be relatively flexible, for instance in the form of one or a multiple number of chains, preferably metal chains. By providing relatively flexible ballast, transport and handling of the ballast may be facilitated. In a preferred embodiment, the ballast can form a releasable part of the floating structure. By providing releasable mountable ballast, handling of the floating structure, such as its installation in the water, may be facilitated.

In an advantageous manner, the floating structure is further comprising a coupling element for coupling with a supporting structure for culturing marine organisms. The supporting structure may comprise seeding lines and/or nets. For example, the coupling elements may comprise eyes and/or hooks. Advantageously, a multiple number of coupling elements are provided. More preferably, the multiple number of coupling elements is provided substantially at the same height, enabling the coupling of a multiple number of supporting structures, such as plant lines, substantially at the same height. Therefore, it may be accomplished that multiple supporting structures have a substantially similar draught, i.e. the multiple number of supporting structures may lie at a substantially similar distance under the fluid surface, e.g. the surface of the sea.

Additionally, more coupling elements for coupling with corresponding supporting structures for culturing marine organisms are provided at another height level, enabling that even more supporting structures may be provided.

Further, the floating unit may comprise second coupling elements for coupling the floating unit to another floating unit or to a fixation means, such as an anchor means. Advantageously, the floating structure comprises a multiple number of mutually coupled floating units. The units may be coupled by connecting a first lateral end of the coupling member, such as a cable, a rope, a rod or a chain, to a first second coupling element provided at a first unit and connecting a second lateral end of the coupling member to a second floating unit. Advantageously, two adjacent units are coupled by means of a multiple number of coupling members, e.g. two, three or four coupling members. Preferably, the coupling members are substantially parallel with respect to each other.

The invention further relates to a method for adapting a draught level of a floating structure, comprising the step of increasing the draught of the floating structure when the amplitude of exterior fluid waves increases.

Moreover, the invention further relates to a method of culturing marine organisms, such as bivalves, seaweed and/or sponges. In this method a floating structure is provided with the marine organisms, preferably macroscopic marine algae, e.g. seaweed.

Besides, the invention relates to a method for adapting a draught level of a floating structure, and to a method of culturing marine organisms.

Further advantageous embodiments of the invention are described in the depending claims.

### LEGENDS TO THE FIGURES

The Figures are only schematic representations of the invention and are exclusively given by way of non-limitative exemplary embodiments.
Figure 1a shows a schematic perspective view of a first embodiment of a floating structure according to the invention;
Figure 1b shows a schematic cross sectional view of the floating structure of Fig. 1a;
Figure 2 shows a schematic graph of amounts of fluid flowing into a chamber of an embodiment of a floating structure according to the invention, and from the chamber to its exterior;
Figure 3 shows a schematic cross sectional view of a second embodiment of a floating structure according to the invention;
Figure 4a shows a schematic perspective view of a third embodiment of a floating structure according to the invention;
Figure 4b shows a schematic cross sectional view of the floating structure of Fig. 4a;
Figure 5 shows a schematic perspective view of a fourth embodiment of a floating structure according to the invention;
Figure 6a shows a schematic perspective view of a fifth embodiment of a floating structure according to the invention;
Figure 6b shows a schematic perspective view of a sixth embodiment of a floating structure according to the invention;
Figure 6c shows a schematic perspective view of a seventh embodiment of a floating structure according to the invention;
Figure 7 shows a schematic perspective view of an eight embodiment of a floating structure according to the invention; and
Figure 8 shows a flowchart a method for adapting a draught level of a floating structure according to the invention; and
Figure 9 shows a flowchart of method steps of a method of culturing marine organisms according to the invention.

### DETAILED DESCRIPTION OF THE INVENTION

The invention will now be illustrated by the following examples.

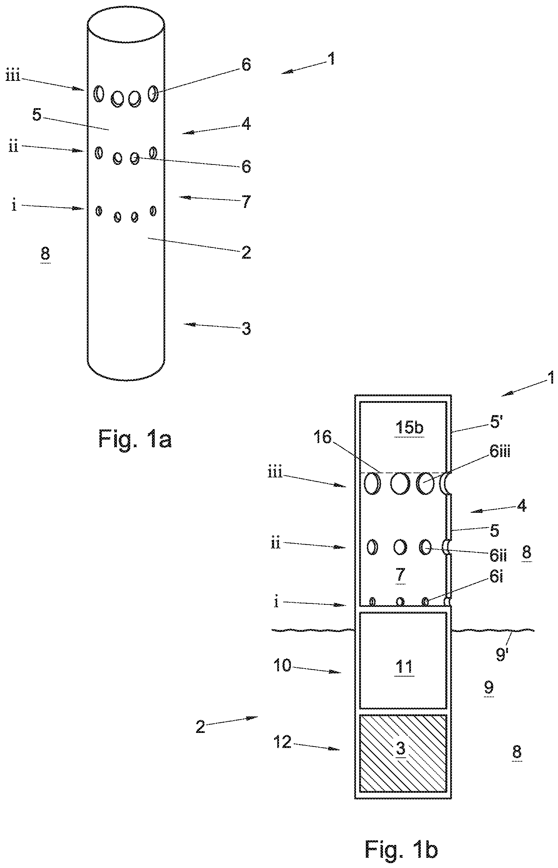

Figure 1a shows a schematic perspective view of a first embodiment of a floating structure according to the invention. The floating structure 1 comprises a floating unit 2 provided with ballast 3, and a draught adapting module 4 arranged at a top part of the floating unit 2 and including an upwardly extending wall 5 surrounding a chamber 7, wherein the upwardly extending wall 5 is provided, at different height levels i, ii, iii, with openings 6 enabling a fluid exchange between the chamber 7 and the exterior 8 of the floating structure 1.

Figure 1b shows a schematic cross sectional view of the floating structure 1 of Fig. 1a. The floating structure 1 is partly submerged in fluid 9, e.g. sea water. In this embodiment, the floating structure comprises a floating body 10, having a density which is lower than the density of the surrounding fluid 9. The body 10 comprises a water tightly enclosed chamber 11 filled with air. Alternatively, the chamber comprises foam, e.g. polyurethane or polystyrene foam.

The floating structure 1 may be balanced in such a way that the lower openings 6i of the chamber 7 are above the surface, i.e. the lower openings 6i are located above the waterline 9', when the water is relatively calm. That is, when there are no waves or only relatively small waves.

It is noted that the floating structure does not need to comprise a separate floating body 10. A float volume having less weight than a volume of a fluid being displaced by it, i.e. having a lower density, may be integrated in the floating structure, preferably, by manufacturing the floating unit 2 out of a material with a lower density than the density of the surrounding water, e.g. a high density polyethylene (HDPE).

The ballast 3 is provided in the form of a ballast body 12. The ballast body may be a ballast chamber filled with a heavy material, such as sand, pebbles 3a, concrete or lead. It could also be a chain hanging down, rope with ballast body connected etc. to improve the low weight point of the structure. It could even be used as a depth regulator if the draught becomes too much and the weights hit the bottom in more shallow waters such as Dutch coast waters.

Alternatively, the ballast is not provided as a ballast body. For example, a ballast providing portion is integrated in the floating unit, e.g. by making the unit 2 of a material having a density larger than sea water, such as a glass filled plastic, e.g. glass filled polyethylene.

Alternatively or additionally, the ballast may be provided by lines 23 on which marine organisms 25 grow and/or by the marine organisms.

In the embodiment of Fig. 1a the floating unit includes a single downwardly extending body. It is noted that the unit may alternatively include a multiple number of downwardly extending bodies, e.g. two, three, four or five.

The openings 6 comprise a first group of first openings 6i at a first height level i in the upwardly extending wall 5 and a second group of second openings 6ii at a second height level ii in the upwardly extending wall 5. The second height level ii is higher than the first height level i.

Further, the fluid exchange capacity of the second group 6ii is larger than the fluid exchange capacity of the first group 6ii. In this embodiment the second openings 6ii are larger than the first openings 6i.

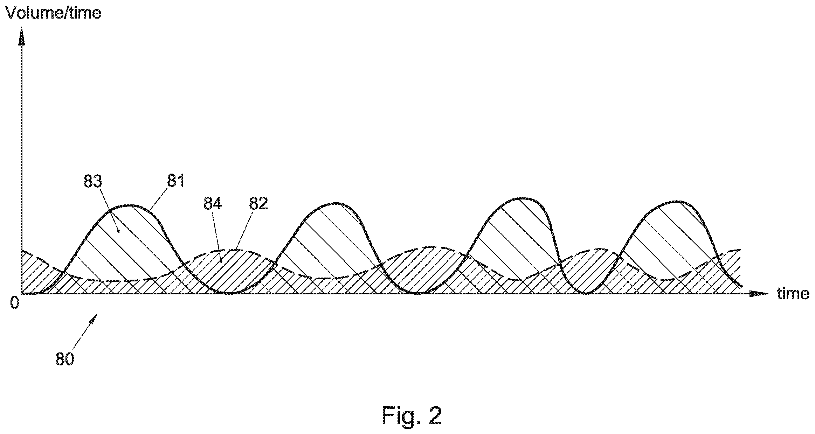

Figure 2 shows a schematic graph 80 of amounts of fluid flowing into a chamber 7 of an embodiment of a floating structure 1 according to the invention, and from the chamber 7 to its exterior. By way of example, Fig. 2 shows how fluid in a special case may flow under certain circumstances. Here, the flow rate of inflowing fluid, shown as an uninterrupted line 81, and the flow rate of fluid flowing from the chamber, shown as an interrupted line 82, are both changing over time, in a periodically substantially repeating pattern. Under similar conditions, the average flow rate of fluid flowing into the chamber will be higher when the wave action is, and thus the waves are, relatively big, than when the waves are relatively small.

In the graph 80 the area 83 below the uninterrupted line 81 represents the total volume of fluid flown into the chamber of the draught adapting module, and the area 84 below the interrupted line 82 represents the total volume of fluid flown out from it. Here, relatively strong wave action results in more fluid flowing in than out. As long as net inflow exceeds net outflow the resulting weight gain will cause the structure to keep sinking. However, due to the further sinking of the structure the outflow speed may increase and/or the inflow speed may decrease. From the moment that an equilibrium between the inflow and outflow is reached the structure will substantially maintain its draught level. If later on wave action decreases, the net outflow may exceed the net inflow resulting into upwardly rising of the structure, thereby decreasing the draught level of the floating structure.

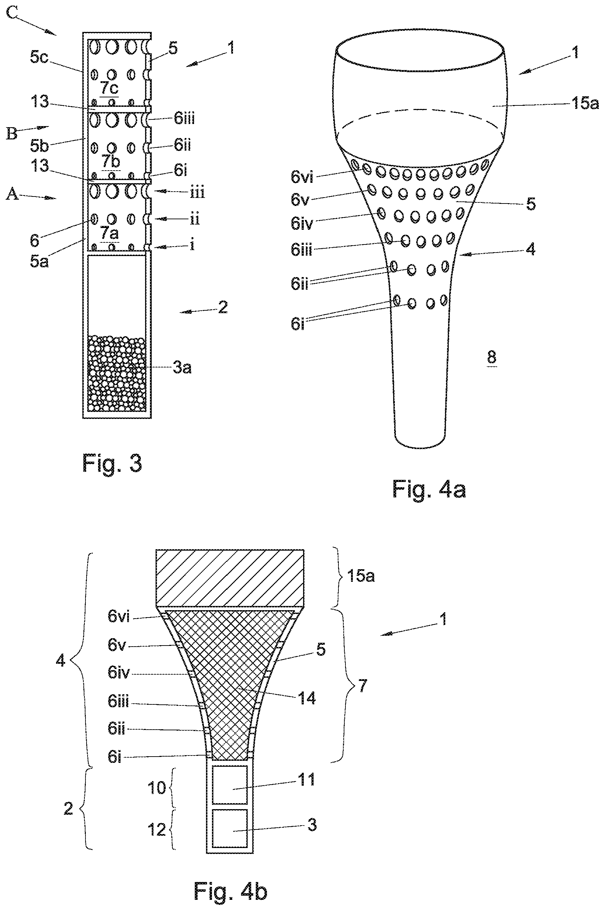

Figure 3 shows a schematic cross sectional view of a second embodiment of a floating structure 1 according to the invention. In this second embodiment the chamber 7 includes partition plates 13 arranged at specific height positions providing staggered chamber partitions 7a, 7b, 7c. The openings 6 include a repeated opening pattern A, B, C, each opening pattern A, B, C corresponding to a respective chamber partition 7a, 7b, 7c. In this embodiment the openings of each chamber partition comprise three groups of openings 6i, 6ii, 6iii, wherein each group comprises the same number of openings.

Preferably, the partition plates 13 are watertight. Alternatively, the plates may comprise relatively small and/or relatively few apertures.

The openings 6 in a part 5a, 5b, 5c of the upwardly extending wall 5 may form an opening pattern. In the embodiment of Fig. 3, the opening pattern in a first wall part 5a includes three groups of superimposed openings. The openings of a higher located group are larger than the openings in a lower positioned group, and are therefore capable of letting through more water within in a certain period of time than a lower positioned group is capable of. The opening pattern of the first wall part 5a is repeated in other wall parts 5b, 5c.

Alternatively, the opening pattern in the wall or one or a multiple number of the wall parts may includes another number than three groups of superimposed openings, for example two, four, five, ten, twelve or twenty superimposed groups.

Although Fig. 3 shows three staggered chamber partitions 7a, 7b, 7c, the floating unit may alternatively comprise another number of chamber partitions 7, for instance two, four, five, six or seven partitions. The partitions may vary in height. Preferably, each higher located chamber partition has a smaller height than the subsequent lower located chamber partition, thereby making it relatively easy to increase the draught of the floating unit. For example, the lowest partition can have a height of about 75 cm, whereas the subsequent partitions can have a height of respectively about 60, 50, 40 and 35 cm. The total height of the staggered chamber partitions 7 together may be in the range of 1.5 to 5 meter, preferably in the range of 2 to 3 meter, for instance about 2.5 meter.

In a preferred embodiment, the opening pattern of each chamber partition 7 comprises merely two groups arranged one above the other iii, i of openings 6iii, 6i.

Preferably, the design of the floating unit 2 is such that the floating unit 2 will not substantially rise during e.g. two or three wave periods wherein the tops of coincidentally relatively low waves will not reach the upper group iii of openings 6. For example, the upper group iii has a fluid exchange capacity substantially larger than that of the lower group i. For instance, the ratio between the exchange capacity of the upper group iii and the exchange capacity of the lower group iii is in the range of 1:10 to 1:1000, preferably in the range of 1:50 to 1:200, more preferably the ratio is about 1:100. For instance, the openings 6 of the upper group iii can be larger than the openings 6 of the lower group i. Alternatively or additionally, the upper group iii may comprise more openings than the lower group i.

It is noted that the openings of the upper group iii are preferably located just below the partition plate 13 forming the top of the respective chamber partition 7, thereby counteracting that the waves cannot substantially completely fill the chamber partition. For example, upper edges of said openings are located just a few millimetres, e.g. about 5 or 10 mm below said partition plate 13. Further, it is noted that the openings 6 of the lower group i are preferably located just above the partition plate 13, thereby counteracting that the compartment cannot substantially completely empty when the wave action has decreased. For example, lower edges of said openings are located just a few millimetres, e.g. about 5 or 10 mm above said partition plate 13.

As can be seen in Figures 1a, 1b, 3, 6 and 7, the upwardly extending wall 5 may be substantially tubular shaped. For example, the diameter of the tubular walls can be between 200 and 600 mm, preferably between 300 and 400 mm, more preferably about 355 mm.

Figure 4a shows a schematic perspective view of a third embodiment of a floating structure according to the invention.

Further, Figure 4b shows a schematic cross sectional view of the floating structure of Fig. 4a. The upwardly extending wall 5 has an upwardly divergent profile. Besides, the upwardly extending wall 5 may be funnel shaped.

Here, the first openings 6i and the second openings 6ii have substantially the same size, and the number of second openings 6ii is larger than the number of first openings 6i. Preferably, each higher located group of openings 6iii-6vi in the upwardly extending wall 5 may comprise more openings than each group located below the respective group. However, the number of second openings 6ii may be smaller or equal to the number of first openings 6i. For instance, the number of first and second openings can both be one. It is noted that the ratio between the exchange capacity of the first and the second group together at one hand and the exchange capacity of the third group at the other hand is preferably in the range of 1:10 to 1:1000, preferably in the range of 1:50 to 1:200, more preferably the ratio is about 1:100.

Alternatively, when the chamber 7 comprises staggered chamber partitions 7a-7c, each higher located group of openings 6iii-6vi in the upwardly extending wall part 5a, 5b, 5c may comprise more openings than each group located below the respective group of that wall part.

Preferably, the exchange capacity of the topmost group of openings in a respective chamber partition is substantially larger than the total exchange capacity of all lower located groups of openings of said respective chamber partition, e.g. at least 10, 50, 100 or 1000 times larger.

Moreover, the chamber 7 may contain fluid absorbing material 14, e.g. a sponge material 14.

Further, the chamber 7 may include a flow resistive structure 14. The flow resistive structure 14 may comprise a micro-structure or a material having a vesicular texture.

The embodiment draught adapting module 4 shown in Fig. 4a-4b includes a security floating body 15a arranged on top of the chamber 7. The security floating body is constructed as a buoy, made of a foam material with a density substantially lower than the density of sea water.

Additionally or alternatively, the floating structure may comprise an air chamber 15b, as is shown in Fig. 1b. Air being captured in the air chamber may prevent that the structure 1 completely submerges when the chamber 7 is completely filled with water, i.e. when the chamber 7 is filled up to a plane 16 corresponding with a topside of an highest positioned opening 6iii.

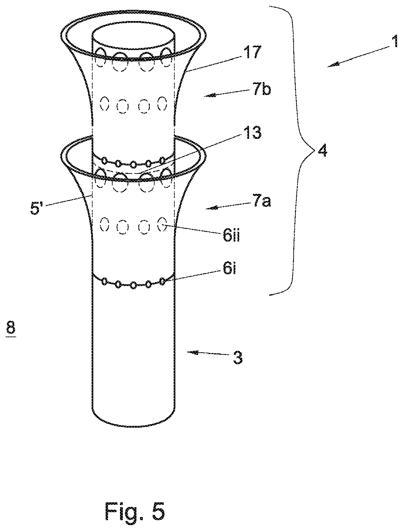

Figure 5 shows a schematic perspective view of a fourth embodiment of a floating structure according to the invention. The draught adapting module 4 comprises a fluid collection element 17 being fixed to the exterior 5' of the wall 5 and extending radially away therefrom. Advantageously, the fluid collection element 17 is funnel shaped, as can be seen in Fig. 5. The fluid collection element 17 may be at least partly surrounding the upwardly extending wall 5, or one or a multiple number of the parts 5a, 5b, 5c of the wall 5. Advantageously, in case that the module 4 includes staggered chamber partitions 7a, 7b, a multiple number of the partitions, and preferably all of them, may each comprise at least one fluid collection element 17.

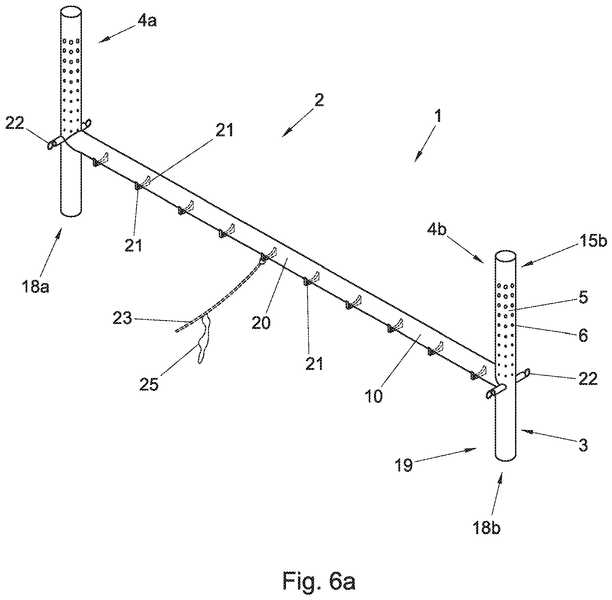

Figure 6a shows a schematic perspective view of a fifth embodiment of a floating structure 1 according to the invention. The structure 1 comprises a substantially horizontally elongated floating unit 2. The floating unit comprises a multiple number of draught adapting modules 4a, 4b.

The floating unit includes a multiple number of downwardly extending bodies 18a, 18b mutually connected via at least one substantially horizontal intermediate structure 20.

For example, as shown in the embodiment of Fig. 6a, the unit 2 may be H-shaped and may comprise two tubular members 18a, 18b forming the downwardly extending bodies 18a, 18b. Each of the two tubular members 18a, 18b comprising a draught adapting module 4a, 4b and a ballast providing portion 19. Here, the ballast providing portion 19 is formed as an integrated part of the tubular design. However, at least a part of the ballast may alternatively be provided in another form, e.g. ballast may be provided by means of a metal chain or by additionally filling a ballast chamber in the horizontal intermediate structure, e.g. a horizontal oriented tube, with water or other ballast material. Further, it is noted that the floating unit 2 may e.g. be about 5, 8, 10, 12 or 15 meter wide, preferably about 10 meter wide. The substantially horizontal intermediate structure 20 may be about 8, 9 or 10 meters long.

Further, the substantially horizontal intermediate structure 20 may be suitable for generating floating power, and may therefore comprise a floating body 10. As mentioned above, the intermediate structure 20 may further comprise a trimming device, which may be used for adapting the floating power of the floating structure. In a preferred embodiment, the floating structure is designed such that, when the floating structure is floating in water of calm conditions, i.e. when there are no substantial waves, the substantially horizontal intermediate structure 20 is floating just below the waterline 9', e.g. a central axis of the substantially horizontal intermediate structure 20 can float about half a meter under the waterline.

The floating structure may be provided with at least one coupling element 21 for coupling with a supporting structure 23 for culturing marine organisms 25, preferably provided at the substantially horizontal intermediate structure 20.

In alternative embodiments of the floating structure 1, the coupling element 21 for coupling with the supporting structure 23 may be provided at other parts of the structure, e.g. at the downwardly extending body.

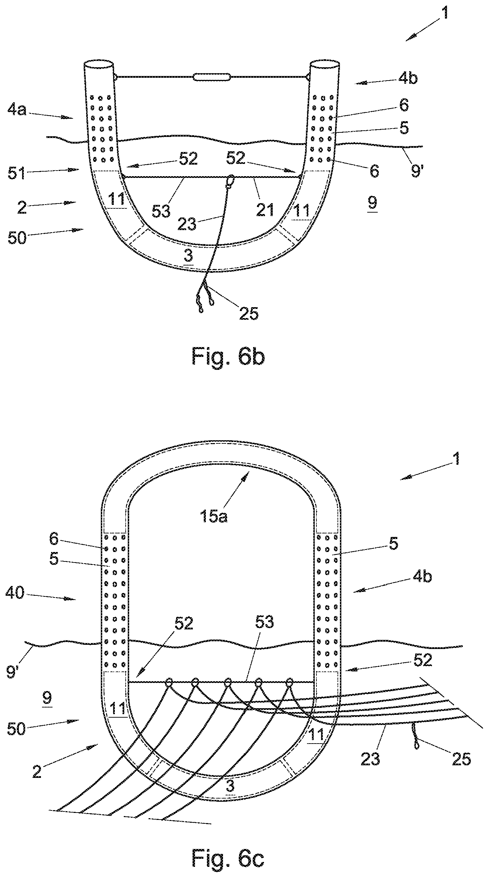

Figure 6b shows a schematic perspective view of a sixth embodiment of a floating structure according to the invention. The floating unit 2 has a U-shaped profile 50. The two ends 51 of the profile 50 form top parts 52 of the floating unit 2. The draught adapting module 4a and a second draught adapting module 4b are arranged on the corresponding floating unit top parts 52.

Advantages of the U-shaped profile 50 of the floating unit 2 may include: a simple construction of the unit 2, a low weight point of the structure 1 and/or less floating capacity of the structure at certain equilibrium floating positions.

Figure 6c shows a schematic perspective view of a seventh embodiment of a floating structure according to the invention. Like the embodiment of Fig. 6, the floating unit 2 of the embodiment of Fig. 6c has a U-shaped profile 50. Two draught adapting modules 4a, 4b are arranged on two corresponding floating unit top parts 52. Further, the floating structure 1 includes a security floating body 15a interconnecting the two draught adapting modules 4a, 4b.

The security floating body 15a may be arched. Therefore, the floating structure can be substantially made of one bent tube. For example, the floating structure may have an O-shaped profile, as shown in Fig. 6c, where the floating unit 2 of the structure has a U-shaped profile 50.

The floating structure 1 may be provided with a cable 53, chain or other element being the coupling element 21 or being provided with the at least one coupling element 21 for coupling with the supporting structure 23.

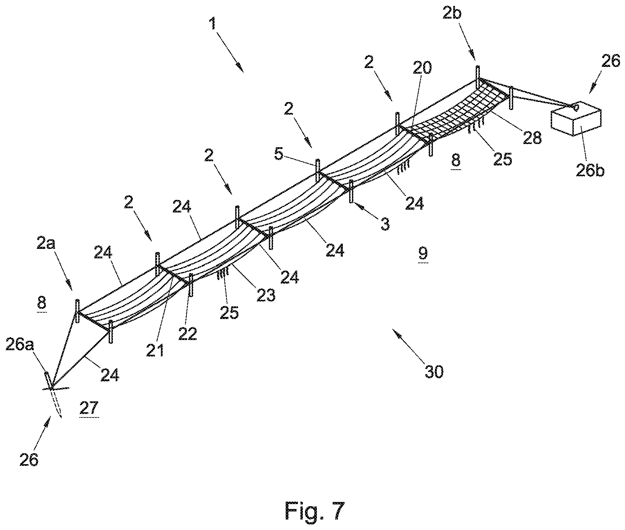

Figure 7 shows a schematic perspective view of an eight embodiment of a floating structure 1 according to the invention. The floating structure comprises six floating units 2 comprising second coupling elements 22 for coupling a first floating unit to second floating unit. The six units 2 are mutually coupled by means of a coupling member 24, e.g. a cable 24. The coupling member 24 may be at least partly stretchable. Additionally or alternatively, the coupling element 22 and/or the coupling member 24 may be provided with a shock absorber, such as a shock breaker. Alternatively or additionally a shock absorber may be provided between the coupling element 22 and the respective coupling member 24.

It is noted that a floating structure 1 according to the invention may comprise any number of floating units 2, e.g. one, two, five, seven, eight, ten, twelve or twenty units.

In a preferred embodiment of the floating structure 1, the floating units 2 are offset about 10 to 25 meters, preferably about 20 meters.

For example, the floating structure 1 comprises seven floating units 2, each unit offset about 20 meters from the subsequent unit. The two outer floating units 2a, 2b are then thus offset about 120 meters from each other. However, in other embodiments the distance between the two outer floating units 2a, 2b can be different, e.g. about 50, 75, 90, 100, 130 or 150 meters.

Here, two floating units 2a, 2b, each located near a lateral end of the structure, are each coupled to an anchor means 26 for anchoring the floating structure, such as a concrete block 26b forming a dead weight mooring 26b or a pin 26a stuck into the sea bottom 27.

The floating structure 1 may be provided with supporting lines 23 and/or one or a multiple number of supporting nets 28 for culturing marine organisms 25, the floating structure may provide an artificial reef 30, supplying a support for the growth of the organisms 25. For example, ten supporting lines 23 may be provided between two subsequent floating units 2. Alternatively, another number of lines 23 may be provided, e.g. one, three, five, eight, twelve, fifteen or twenty.

It is noted that the marine organisms 25, e.g. seaweed 25, can have a density of about 1,06 kg/l, whereas the surrounding sea water 9 can e.g. have a density of about 1,03 to 1,04 kg/l. The lines 23 may be arranged to support a weight of biomass of at least 10 kg per meter of line, preferably at least 15 or at least 20 kg/m, more preferably at least 25 or 30 kg/m.

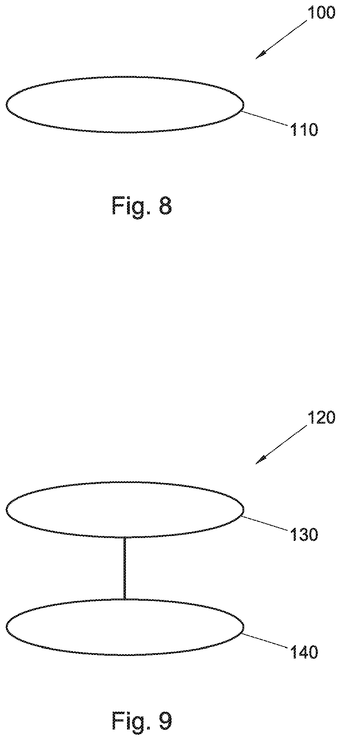

Figure 8 shows a flowchart of a method 100 for adapting a draught level of a floating structure 1 according to the invention. The method 100 for adapting a draught level of a floating structure comprises the step 110 of increasing the draught of the floating structure when the amplitude of exterior fluid 9 waves increases.

Advantageously, the step 110 of increasing the draught includes allowing a positive net fluid flow from exterior 8 into a chamber 7 of a buoyancy adapting module 4.

Figure 9 shows a flowchart of method steps 130, 140 of a method 120 of culturing marine organisms 25 according to the invention. The method 120 of culturing marine organisms comprises the steps of:
- providing a floating structure 1 according to the invention; and
- depositing marine organisms 25, preferably seaweed 25, on the floating structure.

Moreover, the invention comprises a use of a floating structure 1, the floating structure comprising a floating unit 2 provided with ballast 3, and a draught adapting module 4 arranged at a top part of the floating unit 2 and including an upwardly extending wall 5 surrounding a chamber 7, wherein the upwardly extending wall 5 is provided, at different height levels (i, ii, iii), with openings 6 enabling a fluid exchange between the chamber and the exterior 8 of the floating structure 1.

The invention is not limited to the exemplary embodiment described herein. Many variants are possible.

For instance, the floating structure 1 may be provided with additional attachment elements, e.g. for attaching the floating structure to a hoisting means for lifting the structure 1 out of the sea and for lowering the structure 1 into the sea.

Besides, use of a floating structure 1 according to the invention is further possible in other fluids 9, such as brackish water or fresh water, e.g. a lake or a river.

Further, the floating structure cannot only be used in the field of the culture of marine organisms 25, but also in other fields, such as port facilities, pontoon bridges, breakwater structures, marine life observatories, and/or floating piers.

Moreover, the floating structure may be used in the field of power generation. For example, the structure 1 may be used for generating electrical energy, and/or for protecting a floating power generator, e.g. comprising the floating structure 1 of one of the following claims, against strong current.

## Claims

1. A floating structure, comprising a mainly tubular shaped floating unit provided with ballast in a lower part thereof, and a mainly tubular shaped draught adapting module arranged at a top part of the floating unit and oriented, during use of the floating structure, in a mainly vertical direction, the draught adapting module including a chamber that is sidewards surrounded by an upwardly extending tubular wall, wherein the upwardly extending tubular wall is provided, at different height levels, with openings enabling a fluid exchange between the chamber and the exterior of the floating structure,
wherein the openings comprise a first group of first openings at a first height level in the upwardly extending tubular wall and a second group of second openings at a second height level in the upwardly extending tubular wall, and wherein the second height level is higher than the first height level, and wherein the fluid exchange capacity of the second group is larger than the fluid exchange capacity of the first group, preferably such that the second openings are larger than the first openings and/or such that the number of second openings is larger than the number of first openings.

2. A floating structure according to claim 1, wherein the tubular wall of the chamber also surrounds the floating unit.

3. A floating structure according to claim 1 or 2, wherein the floating unit includes a floating chamber, and wherein the chamber of the draught adapting module is located above the floating chamber.

4. A floating structure according to any of the preceding claims, wherein the floating unit includes a ballast chamber located in a lower part thereof.

5. A floating structure according to any of the preceding claims, wherein the chamber of the draught adapting module comprises fluid absorbing material including sponge material, and/or includes a flow resistive structure including a fluid resistive path extending from an opening at a higher level to an opening at a lower level.

6. A floating structure according to any of the preceding claims, wherein the chamber of the draught adapting module includes a partition plate arranged mainly transverse to the tubular direction at a vertical position between the top and the bottom of the draught adapting module providing staggered chamber partitions.

7. A floating structure according to claim 6, wherein the openings include a repeated pattern of openings, each pattern of openings corresponding to a respective chamber partition.

8. A floating structure according to any of the preceding claims, wherein the draught adapting module is provided with means for dynamically adapting the inflow / outflow capacity of a single or a multiple number of openings, such as a valve.

9. A floating structure according to any of the preceding claims, wherein the upwardly extending wall is substantially tubular shaped.

10. A floating structure according to any of the preceding claims, wherein the upwardly extending wall has an upwardly divergent profile, such that the diameter of the tubular wall increases with increasing height.

11. A floating structure according to any of the preceding claims, comprising a multiple number of draught adapting modules.

12. A floating structure according to any of the preceding claims, further comprising a coupling element for coupling with a supporting structure, such as seeding lines and/or nets, for culturing marine organisms.

13. A method for adapting a draught level of a floating structure, comprising the step of increasing the draught of the floating structure when the amplitude of exterior fluid waves increases,
wherein the step of increasing the draught includes the steps of:
- providing a floating structure, comprising a mainly tubular shaped floating unit provided with ballast in a lower part thereof, and a mainly tubular shaped draught adapting module arranged at a top part of the floating unit and oriented, during use of the floating structure, in a mainly vertical direction, the draught adapting module including a chamber that is sidewards surrounded by an upwardly extending tubular wall, wherein the upwardly extending tubular wall is provided, at different height levels, with openings enabling a fluid exchange between the chamber and the exterior of the floating structure,
wherein the openings comprise a first group of first openings at a first height level in the upwardly extending tubular wall and a second group of second openings at a second height level in the upwardly extending tubular wall, and wherein the second height level is higher than the first height level, and
- allowing a positive net fluid flow from exterior into a chamber of a draught adapting module.

14. A method of culturing marine organisms, comprising the steps of:
- providing a floating structure according to any of the preceding claims 1-12; and
- depositing marine organisms, preferably seaweed, on the floating structure.

## Patentansprüche

1. Schwimmende Struktur, umfassend eine im Wesentlichen röhrenförmige Schwimmeinheit mit Ballast in einem unteren Teil davon und ein im Wesentlichen röhrenförmiges Modul zur Tiefganganpassung, angeordnet an einem oberen Teil der Schwimmeinheit und bei Verwendung der schwimmenden Struktur in einer hauptsächlich vertikalen Richtung, das Modul zur Tiefganganpassung umfassend eine Kammer, die seitwärts von einer aufwärts verlaufenden röhrenförmigen Wand umgeben ist, wobei die aufwärts verlaufende röhrenförmige Wand auf verschiedenen Höhenniveaus mit Öffnungen versehen ist, die einen Flüssigkeitsaustausch zwischen der Kammer und dem Äußeren der schwimmenden Struktur ermöglichen,
wobei die Öffnungen eine erste Gruppe von ersten Öffnungen bei einem ersten Höhenniveau in der aufwärts verlaufenden röhrenförmigen Wand und eine zweite Gruppe von zweiten Öffnungen bei einem zweiten Höhenniveau in der aufwärts verlaufenden röhrenförmigen Wand umfassen und wobei das zweite Höhenniveau höher ist als das erste Höhenniveau und wobei die Flüssigkeitsaustauschkapazität der zweiten Gruppe größer ist als die Flüssigkeitsaustauschkapazität der ersten Gruppe, bevorzugt so, dass die zweiten Öffnungen größer sind als die ersten Öffnungen und/oder so, dass die Anzahl der zweiten Öffnungen größer ist als die Anzahl der ersten Öffnungen.

2. Schwimmende Struktur nach Anspruch 1, wobei die röhrenförmige Wand der Kammer ebenfalls die Schwimmeinheit umgibt.

3. Schwimmende Struktur nach Anspruch 1 oder 2, wobei die Schwimmeinheit eine Schwimmkammer umfasst und wobei die Kammer des Moduls zur Tiefganganpassung sich über der Schwimmkammer befindet.

4. Schwimmende Struktur nach einem der vorhergehenden Ansprüche, wobei die Schwimmeinheit eine Ballastkammer umfasst, die sich in einem unteren Teil davon befindet.

5. Schwimmende Struktur nach einem der vorhergehenden Ansprüche, wobei die Kammer des Moduls zur Tiefganganpassung ein flüssigkeitsabsorbierendes Material einschließlich eines Schwammmaterials umfasst und/oder eine flüssigkeitsrestriktive Struktur umfasst, umfassend einen flüssigkeitsbeständigen Weg, der von einer Öffnung bei einem höheren Niveau zu einer Öffnung bei einem niedrigeren Niveau verläuft.

6. Schwimmende Struktur nach einem der vorhergehenden Ansprüche, wobei die Kammer des Moduls zur Tiefganganpassung eine Trennplatte umfasst, hauptsächlich angeordnet quer zu der röhrenförmigen Richtung an einer vertikalen Position zwischen der Ober- und der Unterseite des Moduls zur Tiefganganpassung, um stufenförmige Kammerabtrennungen bereitzustellen.

7. Schwimmende Struktur nach Anspruch 6, wobei die Öffnungen ein wiederholtes Muster von Öffnungen umfasst, jedes Muster von Öffnungen entsprechend einer entsprechenden Kammerabtrennung.

8. Schwimmende Struktur nach einem der vorhergehenden Ansprüche, wobei das Modul zur Tiefganganpassung Mittel zur dynamischen Anpassung der Einfließ-/Ausfließkapazität eines einzelnen oder einer vielfachen Anzahl von Öffnungen umfasst, wie etwa ein Ventil.

9. Schwimmende Struktur nach einem der vorhergehenden Ansprüche, wobei die aufwärts verlaufende Wand im Wesentlichen röhrenförmig ist.

10. Schwimmende Struktur nach einem der vorhergehenden Ansprüche, wobei die aufwärts verlaufende Wand ein aufwärts divergierendes Profil hat, sodass der Durchmesser der röhrenförmigen Wand mit zunehmender Höhe zunimmt.

11. Schwimmende Struktur nach einem der vorhergehenden Ansprüche, umfassend eine vielfache Anzahl von Modulen zur Tiefganganpassung.

12. Schwimmende Struktur nach einem der vorhergehenden Ansprüche, ferner umfassend ein Kopplungselement zum Koppeln mit einer Trägerstruktur, wie etwa Seeding-Linien und/oder Netze, zur Kultivierung von Meeresorganismen.

13. Verfahren zur Anpassung eines Tiefgangsniveaus einer schwimmenden Struktur, umfassend den Schritt des Erhöhens des Tiefgangs der schwimmenden Struktur, wenn die Amplitude äußerer Flüssigkeitswellen zunimmt, wobei der Schritt des Erhöhens des Tiefgangs folgende Schritte umfasst:
- Bereitstellen einer schwimmenden Struktur, umfassend eine vorwiegend röhrenförmige Schwimmeinheit, versehen mit Ballast in einem unteren Teil davon, und einem vorwiegend röhrenförmigen Modul zur Tiefganganpassung, angeordnet an einem oberen Teil der Schwimmeinheit und bei Verwendung der schwimmenden Struktur angeordnet in einer vorwiegend vertikalen Richtung, das Modul zur Tiefganganpassung umfassend eine Kammer, die seitwärts von einer aufwärts verlaufenden röhrenförmigen Wand umgeben ist, wobei die aufwärts verlaufende röhrenförmige Wand an verschiedenen Höhenniveaus mit Öffnungen versehen ist, die einen Flüssigkeitsaustausch zwischen der Kammer und dem Äußeren der schwimmenden Struktur ermöglichen,
wobei die Öffnungen eine erste Gruppe von ersten Öffnungen an einem ersten Höhenniveau in der aufwärts verlaufenden röhrenförmigen Wand und eine zweite Gruppe von zweiten Öffnungen an einem zweiten Höhenniveau in der aufwärts verlaufenden röhrenförmigen Wand umfassen und wobei das zweite Höhenniveau höher ist als das erste Höhenniveau, und
- Erlauben eines positiven Netzflüssigkeitsflusses von außen in eine Kammer eines Moduls zur Tiefganganpassung.

14. Verfahren zur Kultivierung von Meeresorganismen, umfassend folgende Schritte:
- Bereitstellen einer schwimmenden Struktur nach einem der vorhergehenden Ansprüche 1-12; und
- Absetzen von Marineorganismen, bevorzugt Seegras, auf der schwimmenden Struktur.

## Revendications

1. Structure flottante, comprenant une unité flottante principalement de forme tubulaire dotée d'un ballast dans sa partie inférieure, et un module d'adaptation de tirant d'eau principalement de forme tubulaire agencé au niveau d'une partie supérieure de l'unité flottante et orienté, pendant l'utilisation de la structure flottante, dans une direction principalement verticale, le module d'adaptation de tirant d'eau comprenant une chambre qui est entourée latéralement par une paroi tubulaire s'étendant vers le haut, dans laquelle la paroi tubulaire s'étendant vers le haut est dotée, à différents niveaux de hauteur, d'ouvertures permettant un échange de fluide entre la chambre et l'extérieur de la structure flottante,
dans laquelle les ouvertures comprennent un premier groupe de premières ouvertures à un premier niveau de hauteur dans la paroi tubulaire s'étendant vers le haut et un second groupe de secondes ouvertures à un second niveau de hauteur dans la paroi tubulaire s'étendant vers le haut, et dans laquelle le second niveau de hauteur est supérieur au premier niveau de hauteur, et dans laquelle la capacité d'échange de fluide du second groupe est supérieure à la capacité d'échange de fluide du premier groupe, de préférence de sorte que les secondes ouvertures sont supérieures aux premières ouvertures et/ou de sorte que le nombre de secondes ouvertures est supérieur au nombre de premières ouvertures.

2. Structure flottante selon la revendication 1, dans laquelle la paroi tubulaire de la chambre entoure également l'unité flottante.

3. Structure flottante selon la revendication 1 ou 2, dans laquelle l'unité flottante comprend une chambre flottante, et dans laquelle la chambre du module d'adaptation de tirant d'eau est positionnée au-dessus de la chambre flottante.

4. Structure flottante selon l'une quelconque des revendications précédentes, dans laquelle l'unité flottante comprend une chambre de ballast positionnée dans sa partie inférieure.

5. Structure flottante selon l'une quelconque des revendications précédentes, dans laquelle la chambre du module d'adaptation de tirant d'eau comprend un matériau d'absorption de fluide comprenant un matériau spongieux, et/ou comprend une structure résistante à l'écoulement comprenant une trajectoire résistante à l'écoulement s'étendant à partir d'une ouverture à un niveau supérieur jusqu'à une ouverture à un niveau inférieur.

6. Structure flottante selon l'une quelconque des revendications précédentes, dans laquelle la chambre du module d'adaptation de tirant d'eau comprend une plaque de séparation agencée principalement transversalement à la direction tubulaire dans une position verticale entre la partie supérieure et la partie inférieure du module d'adaptation de tirant d'eau fournissant des séparations de chambre en quinconce.

7. Structure flottante selon la revendication 6, dans laquelle les ouvertures comprennent un modèle répété d'ouvertures, chaque modèle d'ouvertures correspondant à une séparation de chambre respective.

8. Structure flottante selon l'une quelconque des revendications précédentes, dans laquelle le module d'adaptation de tirant d'eau est doté de moyens pour adapter dynamiquement la capacité d'entrée / sortie d'une seule ou de plusieurs ouvertures, telle qu'une valve.

9. Structure flottante selon l'une quelconque des revendications précédentes, dans laquelle la paroi s'étendant vers le haut a une forme sensiblement tubulaire.

10. Structure flottante selon l'une quelconque des revendications précédentes, dans laquelle la paroi s'étendant vers le haut a un profil divergent vers le haut, de sorte que le diamètre de la paroi tubulaire augmente avec l'augmentation de la hauteur.

11. Structure flottante selon l'une quelconque des revendications précédentes, comprenant plusieurs modules d'adaptation de tirant d'eau.

12. Structure flottante selon l'une quelconque des revendications précédentes, comprenant en outre un élément de couplage pour se coupler avec une structure de support, telle que des lignes d'ensemencement et/ou des filets, pour la culture d'organismes marins.

13. Procédé pour adapter un niveau de tirant d'eau d'une structure flottante comprenant l'étape d'augmentation du tirant d'eau de la structure flottante lorsque l'amplitude des vagues de fluide extérieur augmente,
dans lequel l'étape d'augmentation du tirant d'eau comprend les étapes suivantes :
- prévoir une structure flottante, comprenant une unité flottante principalement de forme tubulaire dotée d'un ballast dans sa partie inférieure, et un module d'adaptation de tirant d'eau principalement de forme tubulaire agencé au niveau d'une partie supérieure de l'unité flottante et orienté, pendant l'utilisation de la structure flottante, dans une direction principalement verticale, le module d'adaptation de tirant d'eau comprenant une chambre qui est latéralement entourée par une paroi tubulaire s'étendant vers le haut, dans lequel la paroi tubulaire s'étendant vers le haut est dotée, à différents niveaux de hauteur, d'ouvertures permettant un échange de fluide entre la chambre et l'extérieur de la structure flottante,
dans laquelle les ouvertures comprennent un premier groupe de premières ouvertures à un premier niveau de hauteur dans la paroi tubulaire s'étendant vers le haut et un second groupe de secondes ouvertures à un second niveau de hauteur dans la paroi tubulaire s'étendant vers le haut, et dans laquelle le second niveau de hauteur est supérieur au premier niveau de hauteur, et
- permettre un écoulement de fluide net positif à partir de l'extérieur dans une chambre d'un module d'adaptation de tirant d'eau.

14. Procédé pour cultiver des organismes marins, comprenant les étapes suivantes :
- prévoir une structure flottante selon l'une quelconque des revendications 1 à 12 ; et
- déposer des organismes marins, de préférence des algues marines, sur la structure flottante.
